# EUROPÄISCHE PATENTSCHRIFT

(11) **EP 2 561 414 B1**
(45) Veröffentlichungstag und Bekanntmachung des Hinweises auf die Patenterteilung: **02.04.2014**
(21) Anmeldenummer: 10732852.8
(22) Anmeldetag: 24.06.2010
(51) Int. Cl.: G05B 19/042

(54) **VERFAHREN ZUM STEUERN EINER ELEKTRISCHEN MASCHINE UND STEUERVORRICHTUNG**
METHOD FOR CONTROLLING AN ELECTRIC MACHINE AND CONTROL DEVICE
PROCÉDÉ DE COMMANDE D'UNE MACHINE ÉLECTRIQUE ET DISPOSITIF DE COMMANDE

(43) Veröffentlichungstag der Anmeldung: 27.02.2013
(73) Patentinhaber: Siemens Aktiengesellschaft, 80333 München (DE)
(72) Erfinder: EDELMANN, Thomas, 96050 Bamberg (DE); ELSTERER, Stefan, 90762 (DE); HOCK, Christian, 90763 Fürth (DE); PESCHKE, Jörn, 90489 Nürnberg (DE); VOLKMANN, Frank, 90475 Nürnberg (DE)
(86) Internationale Anmeldenummer: PCT/EP2010/003880
(87) Internationale Veröffentlichungsnummer: WO 2011/160659

(56) Entgegenhaltungen:
- WO-A1-2006/084666
- WO-A1-2008/090432
- DE-A1- 10 017 708
- DE-A1- 19 639 424

## Beschreibung

Die vorliegende Erfindung betrifft ein Verfahren zum Steuern einer elektrischen Maschine oder Anlage durch Ansteuern einer Komponente der elektrischen Maschine oder Anlage mit einem Prädikat und Überprüfen der Komponente hinsichtlich der Durchführung des Prädikats. Unter einem Prädikat versteht man in der Steuerungstechnik den funktionalen Zusammenhang zwischen mehreren Komponenten (in der Regel Subjekt und Objekt). Beispielsweise wird ein Antrieb mit einem Schalter eingeschaltet. Hier ist der Schalter das Subjekt, der Antrieb das Objekt und das Einschalten das Prädikat.

Heute werden automatisierungstechnische Lösungen durch meist explizite Programmierung der zu lösenden Aufgabe erstellt. Die Programmierung der Lösung macht dabei jedoch nicht den Hauptteil des Programmieraufwands aus. Noch aufwändiger als die eigentliche Lösung sind die Prüfungen, die dazu führen sollen, dass im Fehlerfall entsprechend reagiert und z.B. eine entsprechende Fehlermeldung generiert wird.

Die Überprüfung von Systemzuständen und Fehlermöglichkeiten wird bislang explizit durchgeführt und ist damit Teil der automatisierungstechnischen Programmierung. Allerdings hat das den Nachteil, dass zum einen die Fehlermöglichkeit als solche erkannt werden muss. Diese Leistung hat der Programmierer zu erbringen. Zum anderen ist es aufwändig, diese Programmteile zu testen, da dazu der Fehlerzustand simuliert oder herbeigeführt werden muss.

Die WO 2006/084666 A1 beschreibt ein System zum Prüfen und Bewerten bedienungsabhängiger Vorgänge und/oder Komponenten, das einen Roboter umfasst, der mit wenigstens einem Sensor an einem Bedien- und/oder Anzeigeelemente der zu prüfenden bzw. zu bewertenden Komponente Messwerte aufnimmt. In einer zentralen Auswerteeinheit werden die Messwerte anhand definierter Qualitätsfunktionen analysiert und bewertet.

In der DE 100 17 708 A1 ist ein Verfahren zum Steuern von Mechanismen oder technischen Systemen beschrieben, bei dem die zu steuernden Mechanismen oder technischen Systeme in ihren Elementarfunktionen mit deren befehlsgemäß definierten Zuständen und den zugehörigen Signalbildern der Sensoren und Aktoren in einer Steuerung gespeichert werden. Ausgehend von einem definierten Referenzzustand zu Beginn der Steuerungsaktivierung erfolgt ein ständiger Vergleich der von der technischen Anlage durch die Sensoren gemeldeten Ist-Zustände mit dem in der Steuerung gespeicherten Sollzustand für alle Elementarfunktionen.

Aus der WO 2008/090432 A1 ist ein elektrisches Gerät, insbesondere ein Haushaltsgerät, bekannt. Zur Selbstdiagnose des Haushaltsgeräts werden beim Einschalten der elektrischen Komponenten die elektrischen Größen der Komponenten einer Steuerungseinrichtung zugeführt, die diese mit Größen vergleicht, die in einer Speichereinrichtung hinterlegt sind.

Die Aufgabe der vorliegenden Erfindung besteht somit darin, Fehler bei Automatisierungslösungen mit weniger Aufwand erkennen zu können.

Erfindungsgemäß wird diese Aufgabe gelöst durch ein Verfahren zum Steuern einer elektrischen Maschine oder Anlage durch Ansteuern einer Komponente der elektrischen Maschine oder Anlage mit einem Prädikat, in dem ein funktionaler Zusammenhang zwischen einem Subjekt und der Komponente definiert ist, wobei in dem Prädikat ein zu erwartender Wert einer Größe der Komponente enthalten ist, und automatisches Überprüfen der Komponente hinsichtlich der Durchführung des Prädikats und wobei bei dem Überprüfen der Komponente überprüft wird, ob sich der erwartete Wert bei der Durchführung des Prädikats tatsächlich einstellt, wobei die Komponente eine Selbstbeschreibung umfasst, die eine Laufzeitinformation enthält, die bei dem Überprüfen als Referenz für die Größe dient, und wobei aus einem Unterschied zwischen der Referenz für die Größe und dem zu erwartenden Wert ein Steuersignal für die elektrische Maschine oder Anlage gewonnen wird.

Darüber hinaus wird erfindungsgemäß bereitgestellt eine Steuervorrichtung für eine elektrische Maschine oder Anlage mit einer Ansteuereinrichtung zum Ansteuern einer Komponente der elektrischen Maschine oder Anlage mit einem Prädikat, in dem ein funktionaler Zusammenhang zwischen einem Subjekt und der Komponente definiert ist, wobei in dem Prädikat ein zu erwartender Wert einer Größe der Komponente enthalten ist, und einer Prüfeinrichtung zum automatischen Überprüfen der Komponente hinsichtlich der Durchführung des Prädikats, wobei mit der Prüfeinrichtung überprüfbar ist, ob sich der erwartete Wert bei der Durchführung des Prädikats tatsächlich einstellt, wobei die Komponente in einem Laufzeitsystem eine Selbstbeschreibung umfasst, die eine Laufzeitinformation enthält, und wobei das Laufzeitsystem dazu ausgebildet ist, aus einem Unterscheid zwischen der Referenz für die Größe und dem zu erwartenden Wert ein Steuersignal für die elektrische Maschine oder Anlage zu gewinnen.

Dabei versteht man unter dem Begriff "Größe" z.B. eine physikalische oder errechnete Größe. Ihr Wert kann absolut oder relativ, aber auch unspezifisch (z.B. "Erhöhung") sein.

In vorteilhafter Weise wird das Prädikat, also die Funktion, die ausgeführt werden muss, mit einer Erwartung (zu erwartender Wert) kombiniert. Damit wird implizit bereits angegeben, welche Konsequenzen die Durchführung des Prädikats haben muss. Wenn sich diese Konsequenzen nicht einstellen, liegt ein Fehler im System vor, und es kann entsprechend reagiert werden. Umgekehrt, wenn sich die Konsequenzen einstellen, arbeitet das System fehlerfrei.

Vorzugsweise erfolgt bei dem Überprüfen eine Messung der (physikalischen) Größe der Komponente, und der resultierende Messwert wird dahingehend überprüft, ob er in einen Schätzbereich, der auf dem zu erwartenden Wert basiert und der als Laufzeitinformation zu der Komponente hinterlegt sein kann, fällt. Es wird also eine tatsächliche Messung durchgeführt und der gewonnene Messwert wird mit dem zu erwartenden Wert aus dem Prädikat oder einem Wert, der sich aus dem zu erwartenden Wert beispielsweise durch Offset ergibt, verglichen. Das Vergleichsergebnis kann zur Steuerung oder Information genutzt werden.

In einer speziellen Ausführungsform kann der zu erwartenden Wert ein relativer Wert sein. Damit ist das Prädikat nicht darauf beschränkt, dass mit ihm nur absolute "Erwartungswerte" übertragen werden, sondern es können auch relative Werte wie beispielsweise eine Zunahme oder eine Abnahme mit dem Prädikat verknüpft sein. Eine spezifische Zunahme wäre beispielsweise "+3A", eine unspezifische Zunahme wäre "Erhöhung".

Darüber hinaus kann automatisch eine Fehlermeldung generiert werden, wenn sich der erwartete Wert bei der Durchführung des Prädikats nicht tatsächlich einstellt. Dies ist insofern vorteilhaft, als etwaige Fehler sofort angezeigt werden können, um daraus möglichst rasch Konsequenzen zu ziehen.

In einem konkreten Ausführungsbeispiel kann die Komponente ein Antrieb sein. Die Komponente kann aber auch jede andere Einheit einer automatisierten Anlage sein, z.B. Glühlampe, Relais oder jeder andere Aktuator.

Ferner kann für die Komponente eine Laufzeitinformation vorgegeben sein, die bei dem Überprüfen als Referenz für die (physikalische) Größe dient. Diese Laufzeitinformation ist eine physikalische Größe wie z.B. die Drehzahl, die Stromaufnahme und dergleichen während der Laufzeit der elektrischen Maschine bzw. Anlage. Wenn diese Laufzeitinformation in einem Steuerprogramm zu der Komponente abgespeichert ist, ist die Überprüfung des Systems mit dem Steuerprogramm möglich.

Das Prädikat kann ein Ein- oder Ausschalten der Komponente bedeuten. Es kann aber auch eine andere Funktion, z.B. bei einem Schrittmotor "einen Schritt ausführen", oder andere Funktion eines automatisierten Systems bedeuten.

Des Weiteren kann die (physikalische) Größe, zu der ein erwarteter Wert in dem Prädikat enthalten ist, der Strom, die Spannung oder die Drehzahl sein. Grundsätzlich kann diese (physikalische) Größe aber auch jede andere Größe sein, die zum Überprüfen an der Komponente gemessen werden kann (z.B. Frequenz, Helligkeit, CO₂-Ausstoß und dergleichen).

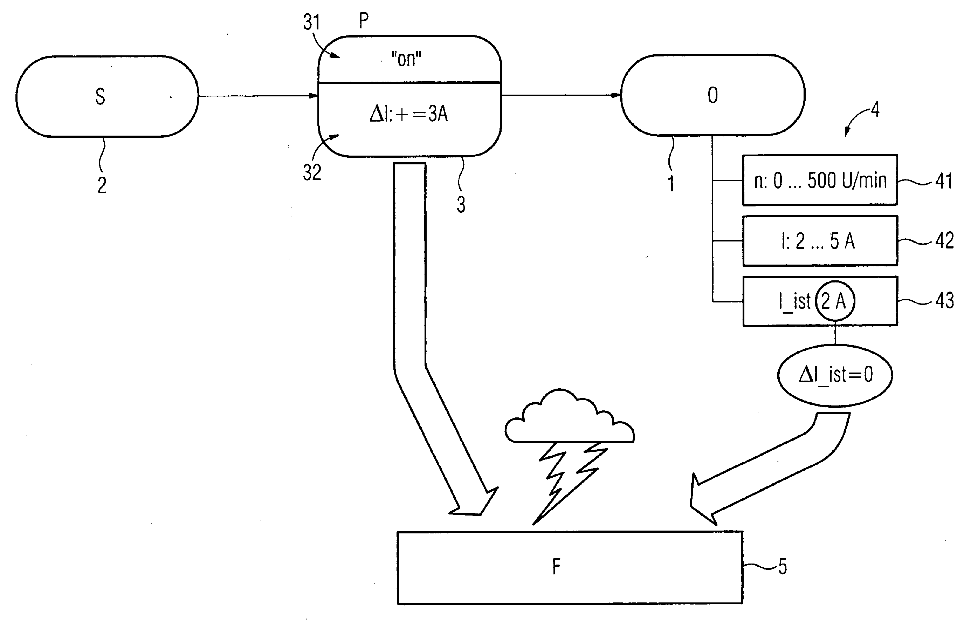

Die vorliegende Erfindung wird nun anhand der beigefügten Zeichnung näher erläutert, die schematisch ein Blockschaltbild des erfindungsgemäßen Verfahrens bzw. der erfindungsgemäßen Steuervorrichtung widerspiegelt.

Die nachfolgend näher geschilderten Ausführungsbeispiele stellen bevorzugte Ausführungsformen der vorliegenden Erfindung dar.

Die Programmierung einer automatisierungstechnischen Anlage durch funktionale Modellierung und die semantische Beschreibung der funktionalen Zusammenhänge bietet erfindungsgemäß neue Möglichkeiten für die automatische Erkennung von Fehlersituationen. Die grundlegende Idee besteht darin, die Beschreibung von funktionalen Zusammenhängen um nichtfunktionale Aspekte zu erweitern. Die zusätzlichen Informationen, die diese nicht-funktionalen Aspekte betreffen, werden zum Generierzeitpunkt (z.B. im Engineering-System) sowie zur Laufzeit (im Run-Time-System) benutzt, um obligatorischen Randbedingungen und Fehlersituationen automatisch zu begegnen.

Durch die automatische Überwachung wird der Applikationsersteller (Projekteur) von Routinearbeiten entlastet. Darüber hinaus wird eine häufige Fehlerquelle bei der Anlagenentwicklung minimiert, denn in einer durchschnittlichen Anlagenentwicklung nach bisherigem Stand verbringt ein Applikationsersteller typischerweise 30% seiner Entwicklungszeit mit der Erstellung von Komponententests oder ähnlichen Arbeiten zur Fehlerbehandlung. Es wird also angestrebt, Fehlersituationen durch das Laufzeitsystem zu erkennen, ohne dass dafür explizite Programmierung nötig wäre. Außerdem wäre eine automatische Erzeugung von menschenlesbaren Fehlermeldungen vorteilhaft.

Nachfolgend wird eine konkrete Ausgestaltung am Beispiel der Figur näher dargelegt. Aus einem Gesamtsystem wird hier beispielhaft die Steuerung einer einzelnen Komponente 1 betrachtet, die das Objekt darstellt. Beispielsweise handelt es sich bei dem Objekt bzw. der Komponente 1 um einen Antrieb. Der Antrieb wird von einem Schalter, der das Subjekt 2 darstellt, angesteuert. Der funktionale Zusammenhang zwischen dem Subjekt 2 und dem Objekt bzw. der Komponente 1 ist in dem Prädikat 3 definiert. Das Prädikat 3 repräsentiert hier die Funktion "einschalten". Es verknüpft Subjekt 2 und Objekt (Komponente) 1 durch die entsprechende Funktion. Im vorliegenden Beispiel lautet der funktionale Zusammenhang: "Der Antrieb wird durch einen Schalter eingeschaltet". Generell kann jeder Zusammenhang zwischen den Komponenten eines automatisierten Systems durch eine ähnliche funktionale Verknüpfung dargestellt werden.

Die Komponenten in einem Laufzeitsystem (z.B. Sensoren, Antriebe, Teilanlagen etc.) haben eine streng typisierte funktionale Schnittstelle. Dies bedeutet, dass eine Komponente nur mit fest vorgegebenen Befehlen angesteuert werden kann (z.B. Einschalten, Ausschalten). Die Komponenten 1 im Laufzeitsystem haben zudem eine Selbstbeschreibung 4. Dabei kann es sich um typisierte, produktbeschreibende Eigenschaften wie Daten für einen Antrieb handeln. Derartige Daten 41, 42 wären beispielsweise: die Stromaufnahme I = 2...5 A und die Drehzahl n = 0...500 U/min. Außerdem kann die Selbstbeschreibung 4 einer Komponente 1 auch eine typisierte Laufzeitinformation 43 enthalten. Im vorliegenden Beispiel lautet die Laufzeitinformation 43 beispielsweise: Stromaufnahme I_ist = 2A. Diese Laufzeitinformation wird aktuell gemessen und in dem entsprechenden Datenfeld hinterlegt.

In dem Beispiel der Figur soll also der Antrieb durch den Schalter gemäß dem Prädikat 3 eingeschaltet werden ("on"). Die Verschaltung der Komponenten (das Subjekt 2 ist ebenfalls eine Komponente) erfolgt also mittels funktionaler Zusammenhänge (Prädikate). Die Prädikate haben neben der Hauptfunktion 31 (hier "on" = einschalten) auch eine semantische Beschreibung 32 über die möglichen Auswirkungen des Prädikats 3 auf die Komponenten 1, 2. Im vorliegenden Beispiel soll sich durch das Prädikat "on" (einschalten) die Stromaufnahme und die Drehzahl erhöhen. Die semantische Beschreibung 32 besagt hier, dass beim Einschalten des Antriebs eine Stromerhöhung um 3A erwartet wird. Die semantischen Informationen liegen maschineninterpretierbar vor.

Durch die Verschaltung von Komponenten 1, 2 mittels Prädikaten 3 im Rahmen der Programmierung werden implizit Informationen verschaltet, die das Laufzeitsystem benutzt, um Integrationstests (Tests vor Inbetriebnahme) oder Tests während des Betriebs durchzuführen. Im vorliegenden Beispiel wird gemäß dem Prädikat 3 erwartet, dass der Antrieb 1 nach dem Einschalten eine um 3A erhöhte Stromaufnahme besitzt. Die zum Antrieb 1 hinterlegte Eigenschaft 42 besagt, dass die Stromaufnahme des Antriebs 1 zwischen 2 und 5A liegen muss. Der elektrische Antrieb besitzt also in Ruhe eine Stromaufnahme von 2A durch die Steuerungselektronik und bei maximaler Leistung eine Stromaufnahme von 5A. Zu dem Antrieb 1 wird nun die Laufzeitinformation bereitgestellt, dass die aktuelle Stromaufnahme I_ist = 2A ist. Dies bedeutet, dass sich trotz Einschaltens des Antriebs keine Erhöhung der Stromaufnahme ergeben hat. Sie ist vielmehr gleich geblieben bei 2A. Dies wiederum bedeutet, dass die tatsächliche Stromaufnahme nicht der erwarteten Stromaufnahme entspricht, denn der erwartete Wert für die Stromaufnahme wäre 2A (Grundstrom) + 3A (relative Erhöhung) = 5A.

Das Laufzeitsystem kann aber auch auf die Änderung der Stromaufnahme im tatsächlichen Fall abstellen. Im vorliegenden Fall beträgt die relative Änderung tatsächlich 0 (ΔI_ist = 0), während die erwartete Änderung der Stromaufnahme ΔI = 3A beträgt. Diesen Unterschied stellt das Laufzeitsystem fest und generiert eine entsprechende Fehlermeldung 5. Alternativ kann aus dieser Information auch ein Steuersignal für das System, d.h. die Anlage bzw. elektrische Maschine, gewonnen werden. Die Fehlermeldung bzw. Information kann also auf der Basis der semantischen Beschreibung und typisierter Komponenteneigenschaften generiert werden. Ein Beispiel einer menschenlesbaren Fehlermeldung wäre: "Fehler beim Einschalten" oder "zu wenig Strom beim Einschalten" und dergleichen.

Erfindungsgemäß ist somit eine Erkennung von Fehlersituationen durch das Laufzeitsystem möglich, ohne dass dafür explizite Programmierung nötig wäre. Es ist also eine Logik für die Fehlererkennung im System enthalten.

### Bezugszeichenliste

- 1: Objekt
- 2: Subjekt
- 3: Prädikat
- 31: Hauptfunktion
- 32: semantische Beschreibung
- 4: Selbstbeschreibung
- 41, 42: produktbeschreibende Daten
- 43: Laufzeitinformation
- 5: Fehlermeldung

## Patentansprüche

1. Verfahren zum Steuern einer elektrischen Maschine oder Anlage durch
- Ansteuern einer Komponente (1) der elektrischen Maschine oder Anlage mit einem Prädikat (3), in dem ein funktionaler Zusammenhang zwischen einem Subjekt (2) und der Komponente (1) definiert ist, wobei
- in dem Prädikat (3) ein zu erwartender Wert (32) einer Größe der Komponente (1) enthalten ist, und
- automatisches Überprüfen der Komponente (1) hinsichtlich der Durchführung des Prädikats (3), wobei
- bei dem Überprüfen der Komponente (1) überprüft wird, ob sich der erwartete Wert (32) bei der Durchführung des Prädikats (3) tatsächlich einstellt,
**dadurch gekennzeichnet, dass**
- die Komponente (1) eine Selbstbeschreibung (4) umfasst, die eine Laufzeitinformation (41, 42, 43) enthält, die bei dem Überprüfen als Referenz für die Größe dient, und dass
- aus einem Unterschied zwischen der Referenz für die Größe und dem zu erwartenden Wert (32) ein Steuersignal für die elektrische Maschine oder Anlage gewonnen wird.

2. Verfahren nach Anspruch 1, wobei bei dem Überprüfen eine Messung der Größe der Komponente (1) erfolgt und der resultierende Messwert dahingehend überprüft wird, ob er in einen Schätzbereich, der auf dem zu erwartenden Wert (32) basiert, fällt.

3. Verfahren nach Anspruch 1 oder 2, wobei der zu erwartende Wert (32) ein relativer Wert ist.

4. Verfahren nach einem der vorhergehenden Ansprüche, wobei automatisch eine Fehlermeldung (5) generiert wird, wenn sich der erwartete Wert (32) bei der Durchführung des Prädikats (3) nicht tatsächlich einstellt.

5. Verfahren nach einem der vorhergehenden Ansprüche, wobei die Komponente (1) ein Antrieb ist.

6. Verfahren nach einem der vorhergehenden Ansprüche, wobei das Prädikat (3) ein Ein- oder Ausschalten der Komponente (1) bedeutet.

7. Verfahren nach einem der vorhergehenden Ansprüche, wobei die Größe der Strom, die Spannung oder die Drehzahl ist.

8. Steuervorrichtung für eine elektrische Maschine oder Anlage mit
- einer Ansteuereinrichtung zum Ansteuern einer Komponente (1) der elektrischen Maschine oder Anlage mit einem Prädikat (3), in dem ein funktionaler Zusammenhang zwischen einem Subjekt (2) und der Komponente (1) definiert ist, wobei
- in dem Prädikat (3) ein zu erwartender Wert (32) einer Größe der Komponente (1) enthalten ist, und
- einer Prüfeinrichtung zum automatischen Überprüfen der Komponente (1) hinsichtlich der Durchführung des Prädikats (3), wobei
- mit der Prüfeinrichtung überprüfbar ist, ob sich der erwartete Wert (32) bei der Durchführung des Prädikats (3) tatsächlich einstellt,
**dadurch gekennzeichnet, dass**
- die Komponente (1) in einem Laufzeitsystem eine Selbstbeschreibung (4) umfasst, die eine Laufzeitinformation (41, 42, 43) enthält, und dass
- das Laufzeitsystem dazu ausgebildet ist, aus einem Unterscheid zwischen der Referenz für die Größe und dem zu erwartenden Wert (32) ein Steuersignal für die elektrische Maschine oder Anlage zu gewinnen.

## Claims

1. Method for controlling an electric machine or unit by
- actuating a component (1) of the electric machine or unit using a predicate (3) in which a functional relationship is defined between a subject (2) and the component (1), wherein
- the predicate (3) contains an expected value (32) of a quantity of the component (1), and
- automatically examining the component (1) in regard to the performance of the predicate (3), wherein
- in the examination of the component (1), it is checked whether the expected value (32) actually arises when the predicate (3) is performed,
**characterised in that**
- the component (1) includes a self-description (4), which contains run-time information (41, 42, 43), which is used as reference for the quantity in the examination and that
- a control signal for the electric machine or unit is obtained from the difference between the reference for the quantity and the value (32) to be expected.

2. Method according to claim 1, wherein in the examination, the quantity of the component (1) is measured and the resulting measured value is accordingly checked to determine whether it falls within an estimated range which is based on the value (32) to be expected.

3. Method according to claim 1 or 2, wherein the value (32) to be expected is a relative value.

4. Method according to one of the preceding claims, wherein an error message (5) is generated automatically if the expected value (32) does not actually arise when the predicate (3) is performed.

5. Method according to one of the preceding claims, wherein the component (1) is a drive.

6. Method according to one of the preceding claims, wherein the predicate (3) indicates a switching on or off of the component (1) .

7. Method according to one of the preceding claims, wherein the quantity is the current, the voltage or the speed.

8. Control device for an electric machine or unit having
- an actuation device for actuating a component (1) of the electric machine or unit using a predicate (3), in which a functional relationship is defined between a subject (2) and the component (1), wherein
- the predicate (3) contains a value (32) to be expected of a quantity of the component (1), and
- an examination facility for automatically examining the component (1) in regard to the performance of the component (3) ,
wherein
- the examination facility can check whether the expected value (32) actually arises when the predicate (3) is performed,
**characterised in that**
- the component in a run-time system includes a self-description (4), which contains run-time information (41, 42, 43), and that
- the run-time system is embodied to obtain a control signal for the electric machine or unit from a difference between the reference for the quantity and the value (32) to be expected.

## Revendications

1. Procédé pour commander une machine ou une installation électrique
- par excitation d'un composant (1) de la machine ou de l'installation électrique en utilisant un prédicat (3), dans lequel un lien fonctionnel entre un sujet (2) et le composant (1) est défini,
- une valeur escomptée (32) d'une grandeur du composant (1) étant contenue dans le prédicat (3), et
- par contrôle automatique du composant (1) pour vérifier l'exécution du prédicat (3),
- le contrôle du composant (1) consistant à vérifier si la valeur escomptée (32) s'établit effectivement lors de l'exécution du prédicat (3),
**caractérisé en ce que**
- le composant (1) comprend une autodescription (4) qui contient une information de temps d'exécution (41, 42, 43), laquelle sert de référence pour la grandeur lors du contrôle, et **en ce que**
- un signal de commande pour la machine ou l'installation électrique est obtenu à partir d'une différence entre la référence pour la grandeur et la valeur escomptée (32).

2. Procédé selon la revendication 1, dans lequel une mesure de la grandeur du composant (1) est effectuée lors du contrôle et la valeur mesurée résultante est contrôlée pour vérifier si elle tombe dans la fourchette d'estimation qui est basée sur la valeur escomptée (32).

3. Procédé selon la revendication 1 ou 2, dans lequel la valeur escomptée (32) est une valeur relative.

4. Procédé selon l'une des revendications précédentes, dans lequel un message d'erreur est automatiquement généré si la valeur escomptée (32) ne s'établit pas effectivement lors de l'exécution du prédicat (3).

5. Procédé selon l'une des revendications précédentes, dans lequel le composant (1) est un entraînement.

6. Procédé selon l'une des revendications précédentes, dans lequel le prédicat (3) signifie une mise sous ou hors tension du composant (1).

7. Procédé selon l'une des revendications précédentes, dans lequel la grandeur est le courant, la tension ou la vitesse de rotation.

8. Dispositif de commande pour une machine ou une installation électrique comprenant
- un moyen d'excitation pour exciter un composant (1) de la machine ou de l'installation électrique en utilisant un prédicat (3), dans lequel un lien fonctionnel entre un sujet (2) et le composant (1) est défini,
- une valeur escomptée (32) d'une grandeur du composant (1) étant contenue dans le prédicat (3), et
- un moyen de contrôle automatique du composant (1) pour vérifier l'exécution du prédicat (3),
- le moyen de contrôle permettant de vérifier si la valeur escomptée (32) s'établit effectivement lors de l'exécution du prédicat (3),
**caractérisé en ce que**
- le composant (1) comprend dans un système de temps d'exécution une autodescription (4) qui contient une information de temps d'exécution (41, 42, 43), et **en ce que**
- le système de temps d'exécution est adapté pour obtenir un signal de commande pour la machine ou l'installation électrique à partir d'une différence entre la référence pour la grandeur et la valeur escomptée (32).
